# EUROPEAN PATENT SPECIFICATION

(11) **EP 0 430 262 B1**
(45) Date of publication and mention of the grant of the patent: **20.05.1998**
(21) Application number: 90122894.0
(22) Date of filing: 29.11.1990
(51) Int. Cl.: G03B 17/24, G11B 5/41, G03B 17/42

(54) **Camera having a magnetic head and film means for cleaning the magnetic head**
Kamera mit einem Magnetkopf und Reinigungsfilmeinheit
Caméra pourvue d'une tête magnétique et unité de film de nettoyage de la tête magnetique

(30) Priority: 01.12.1989 JP 310791/89
(43) Date of publication of application: 05.06.1991
(73) Proprietor: NIKON CORPORATION, Tokyo (JP)
(72) Inventor: Goto, Tetsuro, Funabashi-shi, Chiba-ken (JP); Kazami, Kazuyuki, Tokyo (JP)
(74) Representative: Grünecker, Kinkeldey, Stockmair & Schwanhäusser Anwaltssozietät

(56) References cited:
- EP-A- 0 315 624
- US-A- 3 078 759
- US-A- 4 635 156
- US-A- 4 864 332

## Description

### BACKGROUND OF THE INVENTION

### Field of the Invention

The present invention relates to a camera which can record information on a magnetic recording medium formed on a silver salt film (hereinafter referred to as a film) and to film means loadable to such a camera.

### Related Background Art

In an 8 mm talkie, a magnetic track which is a magnetic recording medium is formed on a film so that sound information is recorded as magnetic record information. In a conventional camera, date and time information of photographing is recorded on a film as optical record information by means of optical imaging.

Recently, cameras which record information on a magnetic track formed on a 35 mm film to allow recording of information other than optical record information have been proposed, see for instance US-A-4 864 332.

In addition, photographic films comprising magnetic recording means and a cleaning and burnishing strip are also known, see US-A-3 078 759.

However, because of contact between a magnetic head and a magnetic tape, powders of magnetic material of the tape deposit on a surface of the magnetic head after certain period of use and this deteriorates the recording characteristics.

### SUMMARY OF THE INVENTION

It is an object of the present invention to provide a camera as defined in claim 1 which has a function of cleaning the magnetic head of the camera, and film means as defined in claim 5 for cleaning the magnetic head.

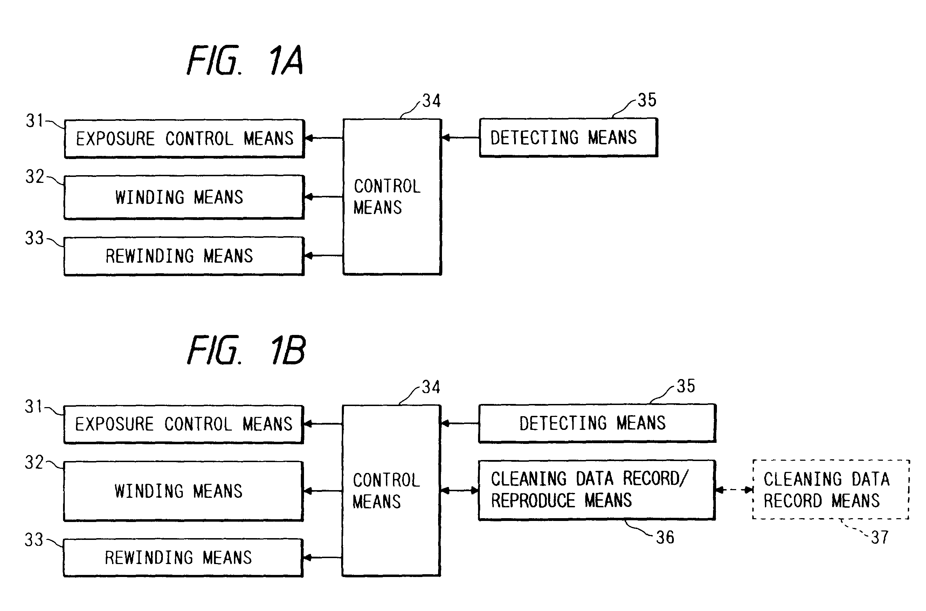

As shown in Fig. 1A, a camera having a magnetic head in accordance with the present invention comprises exposure control means 31 for effecting conventional exposure control, film winding means 32, film rewinding means 33, film discriminating means 35 for discriminating that a loaded film is a cleaning film and producing a discrimination signal, and control means 34 for enabling the exposure control means when the loaded film is a conventional photographing film, and inhibiting the exposure control means and causing the winding means 32 to wind the film and then causing the rewinding means 33 to rewind the film when the loaded film is the cleaning film.

As shown in Fig. 1B, the camera of the present invention further comprises number of times of cleaning store control means 36 for storing the number of tires of cleaning performed by the winding and the rewinding of the film into number of times of cleaning store means 37 provided in the cleaning film or a cartridge for accommodating the cleaning film.

When the discrimination signal indicates that the loaded film is the cleaning film, the control means 34 inhibits the exposure control means and causes the winding means 32 to wind the film and then causes the rewinding means 33 to rewind the film. Accordingly, when the cleaning film is loaded, the cleaning film is wound and then rewound so that the cleaning is effected.

The number of times of cleaning store control means 36 stores the number of times of cleaning performed by winding and rewinding the film into the number of times of cleaning store means 37 provided in the cleaning film or the cartridge for accommodating the cleaning film. Accordingly, when the number of times of usage of the cleaning film reaches a predetermined number, the cleaning may be inhibited.

### BRIEF DESCRIPTION OF THE DRAWINGS

Figs. 1A and 1B schematically show the present invention,

Fig. 2 shows a structure of one embodiment of a camera having a magnetic head in accordance with the present invention,

Fig. 3 shows an outer view of a cleaning cartridge in the embodiment,

Fig. 4 shows a circuit block diagram of the camera in the embodiment,

Fig. 5 shows an operation flow chart in the embodiment,

Fig. 6 shows an outer view of a cleaning cartridge in another embodiment, and

Fig. 7 shows an operation flow chart in the other embodiment.

### DESCRIPTION OF THE PREFERRED EMBODIMENTS

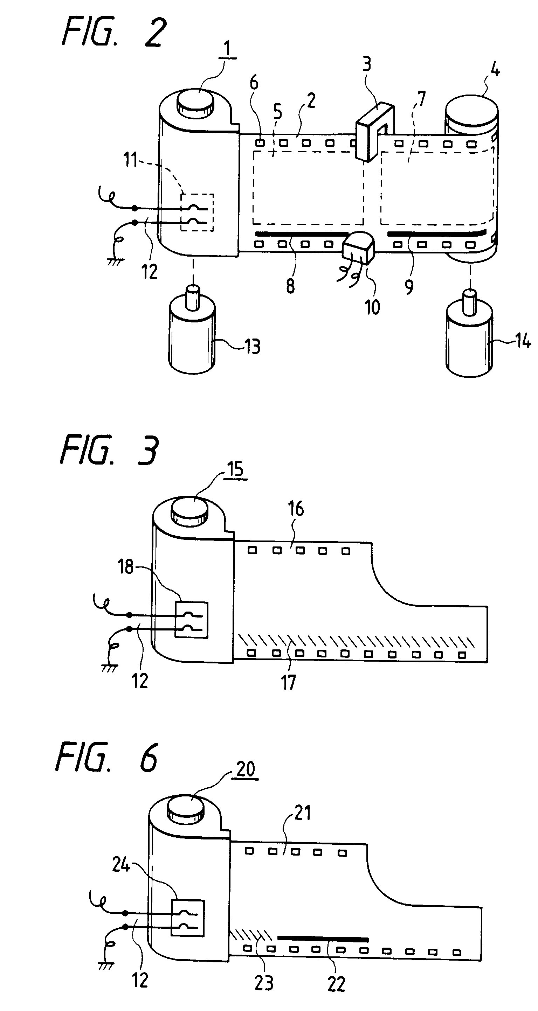

Fig. 2 shows a structure of one embodiment of a camera having a magnetic head in accordance with the present invention. The camera itself is omitted in the drawing and only internal elements are shown.

A film 2 loaded in a 35 mm film cartridge 1 is pulled out of the cartridge by a motor and wrapped around a winding spool 4 in the camera. The winding of the wrapped film 2 is effected by a winding motor 14. The rewinding of the film 2 into the cartridge 1 is effected by a rewinding motor 13. The control of the amounts of winding and rewinding of the film 2 and the detection of the ends of winding and rewinding are effected by a photo-coupler 3 which is disposed across the film 2. The photo-coupler 3 also counts perforations 6 of the film 2. For example, one-frame winding is detected by counting a predetermined number of perforations corresponding to one frame by the photo-coupler 3. A condition in which the film 2 is no more pulled out of the cartridge 1 because the end of film is reached is detected by the fact that the count of the photo-coupler 3 is not incremented in spite of the rotation of the winding motor 14. The end of the rewinding is detected in a similar manner.

Magnetic stripes 8 and 9 for recording information are provided at bottoms of photographing frames 5 and 7 of the film 2, respectively, so that information relating to the photographing frames 5 and 7 may be recorded on the magnetic stripes 8 and 9. A magnetic head 10 is arranged to abut against the film 2 at a position corresponding to the magnetic stripes 8 and 9. For example, when an object image is photographed on the frame 5 and the film 2 is wound by the winding motor 14, the magnetic stripe 8 for the frame 5 is moved in contact with the magnetic head 10 so that information is recorded by the magnetic head 10.

Type discrimination means 12 for discriminating the type of cartridge is provided to abut against a predetermined portion of the cartridge 1. The type discrimination means 12 has two terminals, one of which is grounded. A portion 11 of the cartridge 1 shown by broken lines to which the two terminals contact is insulated. When the cartridge is loaded, the camera first senses the status of the type discrimination means 12 to determine an action to be taken. In the example shown in Fig. 2, a normal operation is permitted.

Fig. 3 shows an outer view of a cleaning cartridge. A cleaning film 16 of a predetermined length is loaded in the cleaning cartridge 15. The cleaning film 16 is provided with known cleaning means 17 at a position to which the magnetic head 10 of Fig. 2 abuts. The cleaning means 17 may be similar to that of a cleaning tape for a conventional tape recorder. It has the function of cleaning the surface of the magnetic head 10 and the function of slightly abrading the surface. Conduction means 18 is provided on a side surface of the cleaning cartridge 15. When the cleaning cartridge 15 is loaded in the camera, the two terminals of the type discrimination means 12 contact the conduction means 18 and they are shorted so that the camera can sense that the cleaning cartridge has been loaded.

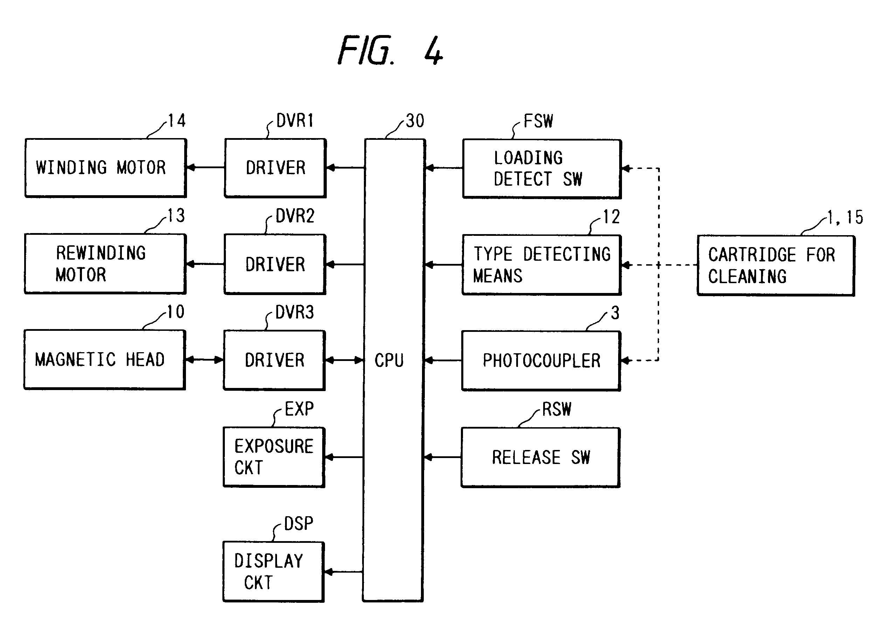

Fig. 4 shows a circuit block diagram of the camera which uses the cleaning cartridge 15. A CPU 30 is located at the center and it generates outputs in accordance with input information to control the operations of the camera.

The CPU 30 senses the loading of the cartridge 1 or the cleaning cartridge 15 by an on/off state of a loading detection switch FSW, and detects the type of the loaded cartridge by the type discrimination means 12. The feeding of the film 2 or the cleaning film 16 is sensed by the photo-coupler 3. The operation of the camera is started in response to the actuation of a release switch RSW.

The winding motor 14 is driven by a first driver DVR1 and the rewinding motor 13 is driven by a second driver DVR2. The magnetic head 10 is driven by a third driver DVR3. The drivers DVR1 and DVR2 merely supply drive signals to the winding motor 14 and the rewinding motor 13, respectively, in response to the output signal of the CPU 30, but the driver DVR3 not only drives the magnetic head 10 to record information on the magnetic stripe of the film but also reproduces the information recorded on the magnetic stripe. Accordingly, signals are bilaterally transmitted between the CPU 30 and the driver DVR3. Normal exposure operation is effected by an exposure circuit EXP and various alarms and various exposure information are displayed by a display circuit DSP.

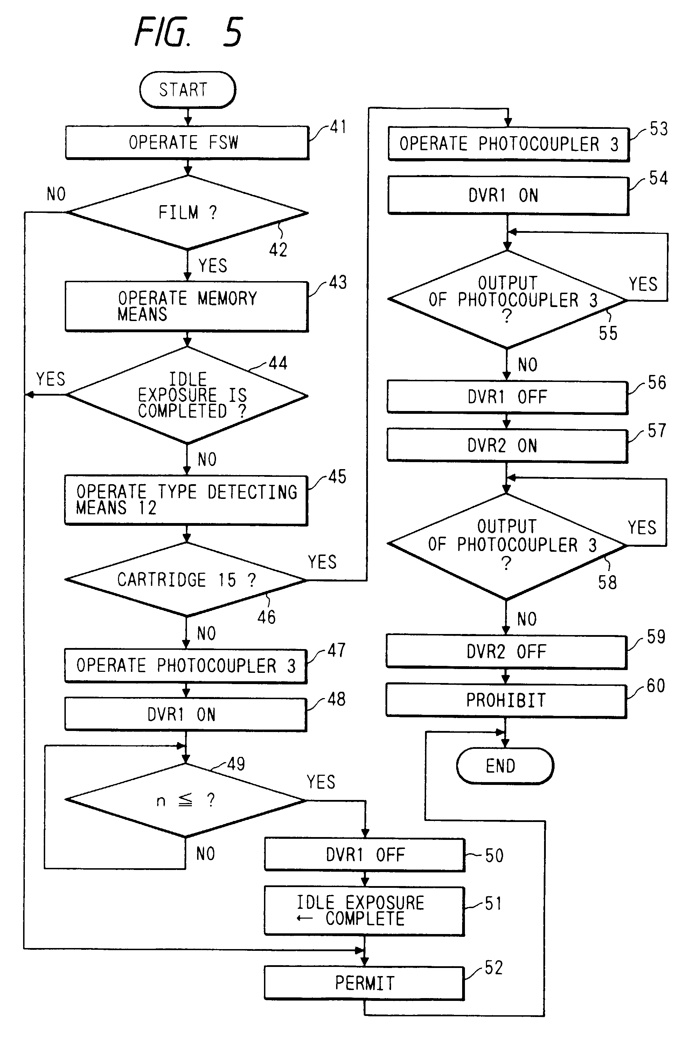

Fig. 5 shows an operation flow chart in the camera shown in Fig. 2.

When the camera is powered on by turning on a switch (not shown), the routine is started and the state of the loading detection switch FSW is sensed (step 41), and the loading of the cartridge is determined (step 42). If the cartridge is not loaded, a normal operation including exposure control of the camera is permitted and the process is terminated (step 52). When the normal operation is permitted, a conventional exposure operation is permitted even without the cartridge to enable the check of operation of the camera. On the other hand, when the loading of the cartridge is detected in the step 42, memory means in the CPU 30 is activated (step 43). The memory means stores historic data of the past operations. An idle exposure signal is read from the historic data to determine if the idle exposure has already been done or not (step 44). If a decision that the idle exposure has been done is made, the normal operation is permitted and the routine is terminated (step 52). This indicates that the photographing operation may be effected because the cartridge has been loaded and the idle exposure has been done. On the other hand, if the decision in the step 44 is that the idle exposure has not been done, the type discrimination means 12 is activated (step 45) to determine whether the loaded cartridge is a conventional cartridge or a cleaning cartridge (step 46). If the decision is that it is the conventional cartridge, the photo-coupler 3 is activated (step 47) and the driver DVR1 is activated to drive the winding motor 14 (step 48) to wrap the film 2 around the spool 4. Whether the output of the photo-coupler 3 has reached a predetermined number n or not is determined (step 49). The predetermined number n corresponds to the amount to permit the leading edge of the film 2 to wrap around the spool 4. When the film feed amount of the idle exposure reaches the predetermined number n in the step 49, the driver DVRl is deactivated to stop the winding motor 14 (step 50), and an end of idle exposure signal is stored in the historic data in the memory means of the CPU 30 (step 51), the normal operation is permitted (step 52) and the routine is terminated.

On the other hand, if the decision in the step 46 is that the cleaning cartridge is loaded, the photo-coupler 3 is activated (step 53) and the driver DVR1 is activated (step 54). As a result, the cleaning film 16 pulled out of the cleaning cartridge 15 is wrapped around the spool 4 while it cleans the magnetic head 10. The cleaning is continued until the count of the photo-coupler 3 is no longer outputted (step 55). This means that the cleaning film 16 has been pulled out to the end, the feed of the film is stopped, and the counting of the perforations 6 by the photo-coupler 3 is no longer incremented. When the output of the photo-coupler 3 disappears in the step 55, the driver DVR1 is deactivated to stop the winding motor 14 (step 56). The driver DVR2 is activated to drive the rewinding motor 13 (step 57) so that the cleaning film 16 wound on the spool 4 is rewound back to the cleaning cartridge 15. The end of the rewinding is detected by the stop of the output of the count of the photocoupler 3, like in the step 55 (step 58). When the end of the rewinding is detected, the driver DVR2 is deactivated to stop the rotation of the rewinding motor 13 (step 59). Then, the normal operation is inhibited and the routine is terminated (step 60). The normal operation is inhibited in the step 60 for preventing inadvertent normal photographing operation because the cleaning cartridge is loaded and preventing the abrasion of the magnetic head 10 by unnecessary cleaning operation.

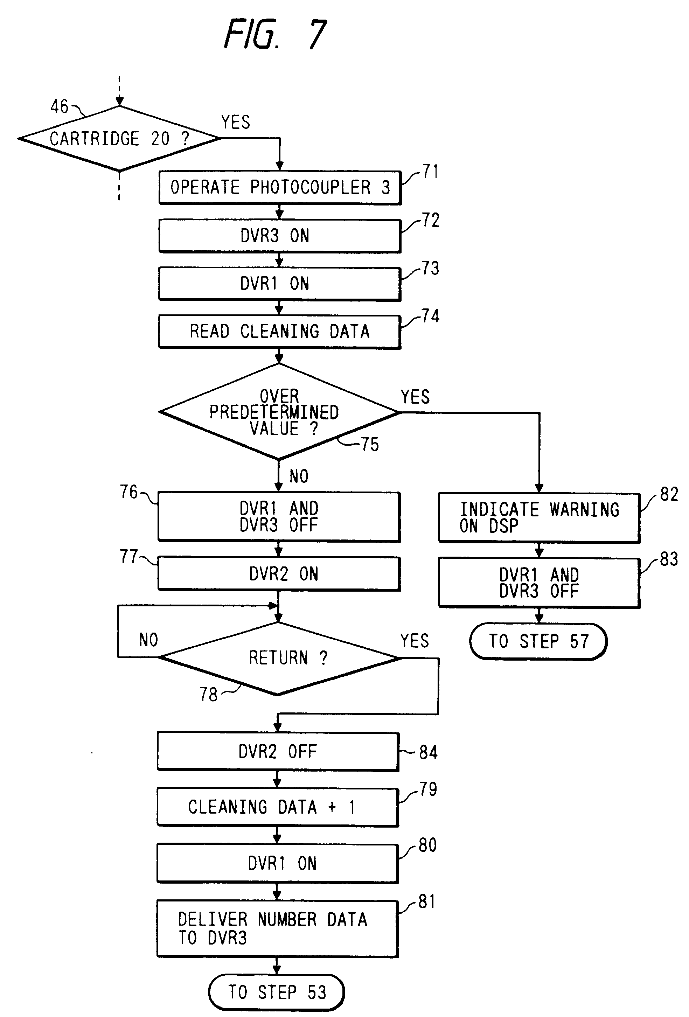

Fig. 6 shows an outer view of a cleaning cartridge in another embodiment. Like the cleaning cartridge shown in Fig. 3, it is provided with condition means 24 on a side surface of a cartridge 20. A cleaning film 21 is provided with a magnetic stripe 22 in addition to cleaning means 23. The number of times of cleaning is stored in the magnetic stripe 22.

An operation of the camera when the cleaning cartridge shown in Fig. 6 is used is now explained with reference to Fig. 7. In Fig. 7, those steps which are identical to those of Fig. 5 are omitted, and only the steps after a step 46 which are different from Fig. 5 are shown.

In the step 46, if it is determined that the loaded cartridge is a cleaning cartridge, the photo-coupler 3 is activated (step 71) and the driver DVR3 is activated to set the magnetic head 10 in a playback mode (step 72). Then, the driver DVR1 is activated to drive the winding motor 14 to wind the cleaning film 21 (step 73). Since the cleaning film 21 is moved while the magnetic head 10 is activated, the data relating to the number of times of cleaning recorded on the magnetic stripe 22 is read into the CPU 30 (step 74). Whether the data relating to the number of times of cleaning thus read is checked to determine whether it exceeds a predetermined number or not (step 75). If the decision is that it does not exceed the predetermined number, that is, the cleaning operation may be continued, the drivers DVR1 and DVR3 are deactivated to stop the winding motor 14 and the operation of the magnetic head 10 (step 76). Then, the driver DVR2 is activated to drive the rewinding motor 13 to rewind the pulled-out cleaning film 21 (step 77). Whether the leading edge of the cleaning film 21 has reached an initial loading position or not is determined (step 78). When the leading edge of the cleaning film 21 reaches the initial loading position, the driver DVR2 is deactivated to stop the rotation of the rewinding motor 13 (step 84) and the data relating to the number of times of cleaning stored in the CPU 30 is incremented by one (step 79). The driver DVR1 is activated to drive the winding motor 14 (step 80), the data relating to the number of times of cleaning is sent to the magnetic head 10 through the driver DVR3 and it is recorded on the magnetic stripe 22 (step 81). Thereafter, the cleaning operation followed by the rewinding is effected like the step 53 of Fig. 5.

On the other hand, if the decision in the step 75 is that the data relating to the number of times of cleaning has reached the predetermined number, an alarm signal is supplied to a display circuit DSP to cause the display circuit DSP to display the alarm to inform to an operator that a durability of the cleaning cartridge 20 has been expired (step 82). The drivers DVR1 and DVR3 are deactivated to stop the winding of the winding motor 4 and the operation of the magnetic head 10 (step 83). Then, in the step 57 of Fig. 5, the pulled-out cleaning film 21 is stored into the cleaning cartridge 20.

Since the data relating to the number of times of cleaning is overwritten on the magnetic stripe 22 on the cleaning film 21, new data may be directly written when the old data written on the magnetic stripe 22 is to be updated, and it is not necessary to erase the old data.

In the embodiment shown in Fig. 6, the magnetic stripe 22 is provided on the cleaning film 21 and the number of times of cleaning is recorded thereon. Alternatively, the camera of the invention can operate with film means comprising a magnetic stripe formed on the cartridge 20 for accommodating the cleaning film 21, or semiconductor memory means such as an EEPROM provided on the cleaning film 21 or the cartridge 20 for accommodating the cleaning film 21 to record the number of times of cleaning in such memory means. In the second embodiment of the present invention, the data relating to the number of times of cleaning is written when the cleaning film is pulled out of the cartridge. Alternatively, it may be written when the cleaning film is rewound.

In accordance with the camera having the magnetic head of the present invention, when the cleaning film is loaded, the cleaning film is wound and then rewound. The magnetic head is cleaned when the cleaning film is moved through the winding and rewinding operations. Further, since the wound cleaning film is always rewound, the cleaning film is always stored in the cartridge.

## Claims

1. A camera comprising a film supply system capable of accommodating either one of a film cartridge (1) containing a photographic film (2) having a magnetic recording medium (8, 9) and a film cartridge (15; 20) containing a film (16; 21) having a cleaning means (17; 23) for cleaning a magnetic head;
said camera further including:
a magnetic head (10) for recording information on said magnetic recording medium (8, 9);
exposure means (31) for exposing said photographic film (2);
winding means (14; 32) for winding the film (2; 16, 21) from the cartridge, (1; 15, 20) accomodated in the film supply system, and
rewinding means (13; 33) for rewinding the film (2; 16, 21) back to the cartridge (1; 15, 20), **characterized by**
detection means (12; 35) for detecting the loading of a cartridge (15, 20) containing a film (16; 21) having said cleaning means (17; 23) in the camera and capable of producing a detection signal indicating that said cartridge containing said film having said cleaning means is loaded, and
control means (30; 34) for inhibiting operation of said exposure means (31) in response to said detection signal.

2. A camera according to claim 1 wherein said control means (30; 34) are adapted for causing said winding means to wind the film (16; 21) from the cartridge (15; 20) in response to said detection signal and then causing said rewinding means to rewind the film back to the cartridge when said detection signal is produced.

3. A camera according to claim 1 including store control means (36) for causing said magnetic head (10) to store data relating to the number of times of usage of the cleaning film for said magnetic head on a magnetic recording media (22) formed on the cleaning film (21) when the cartridge (20) containing the cleaning film is loaded in the camera.

4. A camera according to claim 3 wherein said store control means (36) is arranged to read out the data recorded on the magnetic recording medium (22) on said cleaning film (21) through said magnetic head in response to the loading of the cartridge (20) containing the cleaning film into said camera and, when the read-out data is smaller than a predetermined value, to cause said magnetic head to record data which is one larger than the read-out data on the magnetic recording medium on said cleaning film.

5. Film means adapted to be loaded into and operated by a camera according to claim 1, and comprising:
a cartridge (20) accommodating a film (21) having a magnetic recording medium (22) formed on the film for storing the number of times of usage of the film by means of the magnetic head of said camera, the film further comprising cleaning means (23) for cleaning the magnetic head of said camera,
said cleaning means being formed substantially over the full length of said film.

## Patentansprüche

1. Kamera mit einem Filmbereitstellungssystem, das in der Lage ist, eine Filmkassette (1), die einen photographischen Film (2) mit einem magnetischen Aufzeichnungsmedium (8,9) enthält, und eine Filmkassette (15; 20), die einen Film (16; 21) mit einem Reinigungsmittel (17; 23) zum Reinigen eines Magnetkopfs enthält, aufzunehmen;
wobei die Kamera weiter enthält:
einen Magnetkopf (10) zum Aufzeichnen von Information auf dem magnetischen Aufzeichnungsmedium (8, 9);
ein Belichtungsmittel (31) zum Belichten des photographischen Films (2);
ein Aufspulmittel (14; 32) zum Aufspulen des Films (2; 16, 21) von der Kassette (1; 15, 20), die in dem Filmbereitstellungssystem aufgenommen ist, und
ein Rückspulmittel (13; 33) zum Rückspulen des Films (2; 16, 21) zurück in die Kassette (1; 15, 20) **gekennzeichnet durch**
Detektionsmittel (12; 35) zum Detektieren des Ladens einer Kassette (15; 20), die einen Film (16; 21) mit dem Reinigungsmittel (17; 23) enthält, in die Kamera, das auch in der Lage ist, ein Detektionssignal zu erzeugen, das anzeigt, daß die Kassette, die den Film mit dem Reinigungsmittel enthält, geladen ist, und
Steuermittel (30; 34) zum Unterbinden eines Betriebs des Belichtungsmittels (31) in Erwiderung auf das Detektionssignal.

2. Kamera gemäß Anspruch 1, wobei das Steuermittel (30; 34) geeignet ausgebildet ist, das Aufspulen des Films (16; 21) von der Kassette (15, 20) in Erwiderung auf das Detektionssignal durch das Aufspulmittel zu bewirken und um dann das Rückspulen des Films zurück in die Kassette durch das Rückspulmittel zu bewirken, wenn das Detektionssignal erzeugt wird.

3. Kamera gemäß Anspruch 1, die ein Speichersteuermittel (36) enthält, um zu bewirken, daß der Magnetkopf (10) Daten, die sich auf die Anzahl von Benutzungen des Reinigungsfilms für den Magnetkopf beziehen, auf dem magnetischen Aufzeichnungsmedium (22), das auf dem Reinigungsfilm (21) ausgebildet ist, speichert, wenn die Kassette (20), die den Reinigungsfilm enthält, in die Kamera geladen wird.

4. Kamera gemäß Anspruch 3, wobei das Speichersteuermittel (36) so angeordnet ist, daß es die auf dem magnetischen Aufzeichnungsmedium (22) auf dem Reinigungsfilm (21) aufgezeichneten Daten durch den Magnetkopf in Erwiderung auf das Laden der den Reinigungsfilm enthaltenden Kassette (20) in die Kamera liest und bewirkt, daß der Magnetkopf Daten, die um eins größer sind als die Auslesedaten, auf dem magnetischen Aufzeichnungsmedium auf dem Reinigungsfilm aufzeichnet, wenn die Auslesedaten kleiner sind als ein vorbestimmter Wert.

5. Filmmittel, die geeignet ausgebildet sind zum Laden in und zum Betrieb durch eine Kamera gemäß Anspruch 1, mit:
einer Kassette (20), die einen Film (21) aufnimmt, der ein magnetisches Aufzeichnungsmedium (22) aufweist, das auf dem Film zum Speichern der Anzahl von Benutzungen des Films mittels des Magnetkopfs der Kamera ausgebildet ist, wobei der Film weiter ein Reinigungsmittel (23) umfaßt zum Reinigen des Magnetkopfs der Kamera, wobei das Reinigungsmittel im wesentlichen über die gesamte Länge des Films ausgebildet ist.

## Revendications

1. Appareil photographique comprenant un système de transport de film capable de recevoir soit une cartouche de film (1) contenant un film photographique (2) ayant un support magnétique d'enregistrement (8, 9), soit une cartouche de film (15 ; 20) contenant un film (16 ; 21) ayant des moyens de nettoyage (17 ; 23) pour nettoyer une tête magnétique ;
ledit appareil photographique comprenant en outre :
une tête magnétique (10) pour enregistrer des informations sur ledit support magnétique d'enregistrement (8, 9) ;
des moyens d'exposition (31) pour exposer ledit film photographique (2) ;
des moyens d'enroulement (14 ; 32) pour enrouler le film (2 ; 16, 21) depuis la cartouche (1 ; 15, 20), reçus dans le système de transport de film ; et
des moyens de rembobinage (13 ; 33) pour rembobiner le film (2 ; 16, 21) dans la cartouche (1 ; 15, 20),
caractérisé par
des moyens de détection (12 ; 35) pour détecter le chargement dans l'appareil photographique d'une cartouche (15 ; 20) contenant un film (16 ; 21) ayant lesdits moyens de nettoyage (17 ; 23) et capables de produire un signal de détection indiquant que ladite cartouche contenant ledit film ayant lesdits moyens de nettoyage est chargée, et
des moyens de commande (30; 34) pour inhiber le fonctionnement desdits moyens d'exposition (31) en réponse audit signal de détection.

2. Appareil photographique selon la revendication 1, dans lequel lesdits moyens de commande (30; 34) sont conçus pour amener lesdits moyens d'enroulement à enrouler le film (16 ; 21) à partir de la cartouche (15 ; 20) en réponse audit signal de détection, et amener ensuite lesdits moyens de rembobinage à rembobiner le film dans la cartouche quand ledit signal de détection est produit.

3. Appareil photographique selon la revendication 1, comprenant en outre des moyens de commande de stockage (36) pour amener ladite tête magnétique (10) à stocker des données concernant le nombre de cycles d'utilisation du film de nettoyage pour ladite tête magnétique, sur un support magnétique d'enregistrement (22) formé sur le film de nettoyage (21), quand la cartouche (20) contenant le film de nettoyage est chargée dans l'appareil photographique.

4. Appareil photographique selon la revendication 3, dans lequel lesdits moyens de commande de stockage (36) sont agencés pour lire, au moyen de ladite tête magnétique, les données enregistrées sur le support magnétique d'enregistrement (22) sur ledit film de nettoyage (21) en réponse au chargement de la cartouche (20) contenant le film de nettoyage dans ledit appareil photographique, et, quand les données lues sont inférieures à une valeur prédéterminée, amener ladite tête magnétique à enregistrer des données qui sont supérieures d'une unité aux données lues sur le support magnétique d'enregistrement sur ledit film de nettoyage.

5. Moyens de film conçus pour être chargés dans un appareil photographique selon la revendication 1, et être actionnés par lui, et comprenant :
une cartouche (20) renfermant un film (21) ayant un support magnétique d'enregistrement (22) formé sur le film pour stocker le nombre de cycles d'utilisation du film au moyen de la tête magnétique dudit appareil photographique, le film comprenant en outre des moyens de nettoyage (23) pour nettoyer la tête magnétique dudit appareil photographique, lesdits moyens de nettoyage étant formés pratiquement sur toute la longueur dudit film.
